# EUROPÄISCHE PATENTSCHRIFT

(11) **EP 4 433 926 B1**
(45) Veröffentlichungstag und Bekanntmachung des Hinweises auf die Patenterteilung: **19.02.2025**
(21) Anmeldenummer: 21811233.2
(22) Anmeldetag: 16.11.2021
(51) Int. Cl.: G06F 21/56

(54) **VERFAHREN UND COMPUTERSYSTEM ZUR BEREINIGUNG ELEKTRONISCHER DOKUMENTE VON MÖGLICHEN SCHADPROGRAMMEN**
METHOD AND COMPUTER SYSTEM FOR CLEARING POSSIBLE MALWARE FROM ELECTRONIC DOCUMENTS
PROCÉDÉ ET SYSTÈME INFORMATIQUE POUR ÉLIMINER D'ÉVENTIELS LOGICIELS MALVEILLANTS DE DOCUMENTS ÉLECTRONIQUES

(30) Priorität: 15.11.2021 AT 509102021
(43) Veröffentlichungstag der Anmeldung: 25.09.2024
(73) Patentinhaber: HARTL, Friedrich, 1100 Wien (AT)
(72) Erfinder: HARTL, Friedrich, 1100 Wien (AT)
(74) Vertreter: Puchberger & Partner Patentanwälte
(86) Internationale Anmeldenummer: PCT/AT2021/060433
(87) Internationale Veröffentlichungsnummer: WO 2023/081938

(56) Entgegenhaltungen:
- US-A1- 2003 229 810
- US-A1- 2016 269 422
- US-A1- 2018 262 470

## Beschreibung

Die Erfindung betrifft ein computerimplementiertes Verfahren sowie ein Computersystem gemäß den Oberbegriffen der unabhängigen Patentansprüche.

Schadprogramme, die durch den Empfang von Dateien aus unsicheren Quellen auf einen lokalen Computer bzw. ins lokale Netzwerk gelangen, stellen ein großes Problem bei der Benützung von Computern dar. Zur Abwehr derartiger Schadprogramme sind Computersicherheitslösungen wie beispielsweise Virenprogramme sowie software- oder hardwarebasierte Firewalls bekannt. Immer wieder stellt sich jedoch heraus, dass diese Computersicherheitslösungen neue Schadprogramme bzw. neue Angriffsvarianten nicht erkennen und dadurch die Benutzer der Computer derartigen Angriffen nahezu schutzlos ausgeliefert sind.

Gattungsgemäße Computersysteme sind beispielsweise aus US 2018/262470 A1, US 2003/229810 A1 und US 2016/269422 A1 bekannt.

Häufig gelangen Schadprogramme über E-Mail-Anhänge oder über aus dem Internet heruntergeladene Dateien auf den Computer des Benutzers. Dabei ist es für einen Benutzer oft nahezu unmöglich zu erkennen, ob die Datei ein Schadprogramm enthält oder nicht. Ein besonderes Problem ist dies bei Computersystemen, in denen eine große Menge an Daten erhalten wird, die überdies auch noch personenbezogene oder aus einem anderen Grund zu schützende Daten sind. Beispielsweise kommunizieren Gesundheitseinrichtungen mit einer Vielzahl an Patienten, die sensible Daten per E-Mail übertragen. Die Quelle der erhaltenen elektronischen Dokumente ist jedoch oft unbekannt und daher potenziell unsicher.

Aufgabe der Erfindung ist es nun, ein Verfahren bzw. Computersystem zu schaffen, das eine sichere und anwenderfreundliche Bereinigung elektronischer Dokumente von möglichen Schadprogrammen ermöglicht. Insbesondere bedeutet dies, dass elektronische Dokumente von Schadprogrammen befreit werden können, wobei die Schadprogramme als solche zum Zeitpunkt des Erhalts und der Verarbeitung des Dokumenteninhalts unbekannt sein können. Zusätzlich kann dies gegebenenfalls bedeuten, dass das Bereinigen der elektronischen Dokumente ohne zusätzliche aufwendige Arbeitsschritte des Benutzers erfolgt.

Die erfindungsgemäße Aufgabe wird insbesondere durch die Merkmale der unabhängigen Patentansprüche gelöst.

Die Erfindung betrifft insbesondere ein Verfahren und/oder ein computerimplementiertes Verfahren zur Bereinigung elektronischer Dokumente von möglichen Schadprogrammen, umfassend folgende Schritte:
- Empfangen eines elektronischen Originaldokuments auf einem Steuerungscomputer;
- Übertragen des elektronischen Originaldokuments an einen Anzeigecomputer;
- Übertragen des Dokumenteninhalts des Originaldokuments über ein Darstellungssignal von dem Anzeigecomputer an den Steuerungscomputer,
- Erstellen einer elektronischen Dokumentenkopie aus dem Darstellungssignal durch den Steuerungscomputer.

Es kann vorteilhaft sein, wenn das elektronische Originaldokument vor der Erzeugung des Darstellungssignals zuerst in ein Zwischenformat konvertiert wird,
- wobei das Originaldokument insbesondere eine elektronische Datei eines Textverarbeitungsprogramms, eines Grafikverarbeitungsprogramms oder eines E-Mail-Programms wie beispielsweise eine elektronische Datei nach einem der folgenden Dateiformate: .doc, docx, pdf, xls, xlsx, ppt, pptx, E-Mail oder ähnliches ist,
- und/oder wobei das Zwischenformat eine Bilddatei wie beispielsweise ein Bitmap-File, ein pdf-File, oder ein sonstiges, gegebenenfalls mehrere Dokumentseiten enthaltendes, Container-File ist.

Gegebenenfalls ist vorgesehen, dass das Originaldokument, insbesondere im Zwischenformat, auf dem Anzeigecomputer geöffnet wird.

Gegebenenfalls ist vorgesehen, dass das Darstellungssignal insbesondere das Monitorsignal des Anzeigecomputers ist.

Gegebenenfalls ist vorgesehen, dass das Darstellungssignal aufgezeichnet wird und der Dokumenteninhalt in einer eigenen elektronischen Datei als bereinigte, elektronische Dokumentenkopie gespeichert und/oder angezeigt wird.

Gegebenenfalls ist vorgesehen, dass die elektronische Dokumentenkopie oder das Originaldokument im Zwischenformat von einer Texterkennungssoftware verarbeitet wird und der erkannte Text in der Dokumentenkopie gespeichert wird.

Gegebenenfalls ist vorgesehen, dass das elektronische Originaldokument auf dem Steuerungscomputer von einer unsicheren Quelle, insbesondere aus dem Internet und/oder von außerhalb des lokalen Netzwerks, empfangen wird.

Gegebenenfalls ist vorgesehen, dass das elektronische Originaldokument von einem Benutzercomputer an den Steuerungscomputer gesendet wird.

Gegebenenfalls ist vorgesehen, dass das Übertragen des elektronischen Originaldokuments an einen Anzeigecomputer über eine serielle Datenschnittstelle erfolgt.

Gegebenenfalls ist vorgesehen, dass das Übertragen des Dokumenteninhalts des Originaldokuments von dem Anzeigecomputer an den Steuerungscomputer über ein HDMI-Signal oder über ein Lichtleitersignal erfolgt.

Gegebenenfalls ist vorgesehen, dass beim Übertragen des Dokumenteninhalts des Originaldokuments von dem Anzeigecomputer an den Steuerungscomputer der gesamte Dokumenteninhalt des Originaldokuments übertragen wird.

Gegebenenfalls ist vorgesehen, dass der Anzeigecomputer ausschließlich ein Darstellungssignal an den Steuerungscomputer oder an den Grabber überträgt.

Gegebenenfalls ist vorgesehen, dass der elektronischen Dokumentenkopie weitere Informationen, wie beispielsweise Metadaten, eine Seitenzahl, der ursprüngliche Dateiname und/oder ein QR-Code hinzugefügt werden, wobei diese Information insbesondere der dem Darstellungssignal beigefügt werden.

Insbesondere betrifft die Erfindung ein Computersystem zur Bereinigung elektronischer Dokumente von möglichen Schadprogrammen, umfassend einen Steuerungscomputer und einen Anzeigecomputer,
- wobei der Steuerungscomputer ein elektronisches Originaldokument empfängt und an den Anzeigecomputer überträgt,
- wobei der Anzeigecomputer den Dokumenteninhalt des vom Steuerungscomputer erhaltenen Originaldokuments über ein Darstellungssignal zurück an den Steuerungscomputer überträgt,
- und wobei der Steuerungscomputer aus dem Darstellungssignal eine elektronische Dokumentenkopie erstellt.

Das Computersystem ist bevorzugt zur Ausführung des erfindungsgemäßen Verfahrens eingerichtet oder geeignet.

Gegebenenfalls ist vorgesehen, dass eine serielle Datenschnittstelle vorgesehen ist, über die der Steuerungscomputer das elektronische Originaldokument an den Anzeigecomputer überträgt.

Gegebenenfalls ist vorgesehen, dass eine HDMI-Schnittstelle oder eine Lichtleitersignalschnittstelle vorgesehen ist, über die der Anzeigecomputer den Dokumenteninhalt zurück an den Steuerungscomputer überträgt.

Ein zu lösendes Grundproblem im Bereich der gegenständlichen Erfindung ist es, dass ein Benutzer das zu bereinigende elektronische Dokument in der Regel öffnen muss, um dessen Dokumenteninhalt zu prüfen. Ein verdächtiges elektronisches Dokument kann in der Praxis oft nicht einfach ignoriert bzw. gelöscht werden, da ja der Inhalt für den Empfänger wichtig sein kann. Bei dem vorgeschlagenen System ist ein isoliertes System, insbesondere ein Anzeigecomputer vorgesehen. Dieser Anzeigecomputer umfasst die Möglichkeit, das zu bereinigende elektronische Dokument zu öffnen und den Dokumenteninhalt zu erfassen und/oder auszugeben. Der Anzeigecomputer ist aber bevorzugt ein Teil eines isolierten Systems, das derart vom internen System, also insbesondere vom lokalen Netzwerk bzw. vom Computer des Benutzers, abgetrennt ist, dass eine etwaige Schadsoftware das restliche System, insbesondere das interne System des Benutzers, nicht beeinträchtigen kann.

Für das erfindungsgemäße Verfahren bzw. für das erfindungsgemäße Computersystem können mehrere Anwendungsgebiete exemplarisch genannt werden:
So kann der Dokumenteninhalt elektronischer Dokumente sicher verarbeitet und beispielsweise aus dem Internet heruntergeladen werden. Dies betrifft beispielsweise medizinische Befunde, die von einem Patienten per E-Mail oder per Download aus dem Internet zur Verfügung gestellt werden. Alternativ kann es auch vorkommen, dass derartige Dateien über ein mobiles Speichermedium, wie beispielsweise über einen USB-Stick zur Verfügung gestellt werden. Diese Dateien bzw. elektronischen Dokumente können über das erfindungsgemäße Computersystem und das erfindungsgemäße Verfahren von etwaiger Schadsoftware befreit werden. Eine generische Anwendung betrifft die Bereinigung von elektronischen Dokumenten, die beispielsweise per E-Mail oder über ein anderes Kommunikationsmedium erhalten werden. Zudem zudem können auch von Webseiten heruntergeladene Dokumente, die allerdings nicht vorher geöffnet werden dürfen, sicher dargestellt werden.

Gegebenenfalls kann das zu bereinigende elektronische Dokument über eine serielle Schnittstelle in das isolierte System übertragen und dort - Seite für Seite - weitergeblättert. Diese Schnittstelle kann Daten bevorzugt nur in eine Richtung übertragen.

Gegebenenfalls überträgt die HDMI-Schnittstelle keine Binärdateien bzw. Programmdateien sondern ausschließlich das anzuzeigende Bild einer vom isolierten System angezeigten Dokumentenseite.

Gegebenenfalls kann über einen zusätzlich am Bildschirm des isolierten Systems dargestellten QR-Code das interne System Informationen erhalten, wie viele Seiten im Dokument enthalten sind sowie gegebenenfalls, dass die Darstellung der angeforderten Seite(n) abgeschlossen ist.

Bevorzugt greift das interne System das Bildschirmsignal des Anzeige-PC's über einen Grabber ab, speichert dieses als Bild und fordert die nächste Seite bzw. den nächsten Abschnitt an - solange bis das gesamte Dokument bzw. der gesamte Dokumenteninhalt übertragen ist. Dann generiert es aus allen Bildern eine bereinigte Dokumentenkopie und insbesondere ein sicheres PDF-Dokument.

Sollte das isolierte System von einer Schadsoftware kompromittiert werden, ist dies auf das isolierte System begrenzt. Da keine gefährdete Datenverbindung zum internen System existiert, können unsichere Dateien nicht ins interne System zurück gelangen.

Gegebenenfalls kann der Anzeigecomputer einfach zurückgesetzt werden, wenn er von einer Schadsoftware befallen ist. Gegebenenfalls kann durch simplen Austausch des Systemspeichers, beispielsweise einer Micro-SD Karte, das System zurückgesetzt werden, um die volle Funktionstüchtigkeit herzustellen.

Gegebenenfalls kann der Anzeigecomputer ein Read-Only Dateisystem verwenden, so dass Schadsoftware sich gar nicht ins Betriebssystem einschleusen kann. Gegebenenfalls kann durch einen simplen Neustart das System zurückgesetzt werden, um die volle Funktionstüchtigkeit herzustellen.

Bevorzugt arbeitet das Computersystem vollautomatisch und es ist keine Klassifizierung einzelner Dateien (durch Anwender o.ä.) notwendig. Die für das Computersystem erforderliche Hardware ist bevorzugt aus einfachen handelsüblichen Komponenten zusammengesetzt und daher preisgünstig.

Beim Übertragen des Dokumenteninhalts des Originaldokuments über ein Darstellungssignal von dem Anzeigecomputer an den Steuerungscomputer, wird das Darstellungssignal gegebenenfalls ergänzt durch ein in das Darstellungssignal integriertes Steuerungssignal, z.B. in Form von QR Codes vom Anzeigecomputer an den Steuerungscomputer.

Bevorzugt ist das Zwischenformat eine Bilddatei. Gegebenenfalls ist das Zwischenformat ein Bitmap-File, ein pdf-File oder ein sonstiges Container-File, das mehrere Dokumentseiten enthält.

In weiterer Folge wird die Erfindung anhand der Figuren weiter beschrieben.
Fig. 1 zeigt eine schematische Darstellung der Grundkomponenten des Computersystems bzw. des Verfahrens.
Fig. 2 zeigt eine mögliche Ausgestaltung eines Computersystems.
Fig. 3 zeigt eine schematische Darstellung einer weiteren Ausführungsform eines möglichen Computersystems.

Wenn nicht anders angegeben, so entsprechen die Bezugszeichen folgenden Komponenten: Steuerungscomputer 1, Anzeigecomputer 2, Darstellungssignal 3, unsichere Quelle 4, lokales Netzwerk 5, serielle Datenschnittstelle 6, HDMI-Signal 7, HDMI-Schnittstelle 8, isoliertes System 9, internes System 10, Netzwerkschnittstelle 11, Anzeigegerät 12, Grabber 13, Splitter 14, Benutzercomputer 15, IMAP-Server 16, SMTP-Server 17.

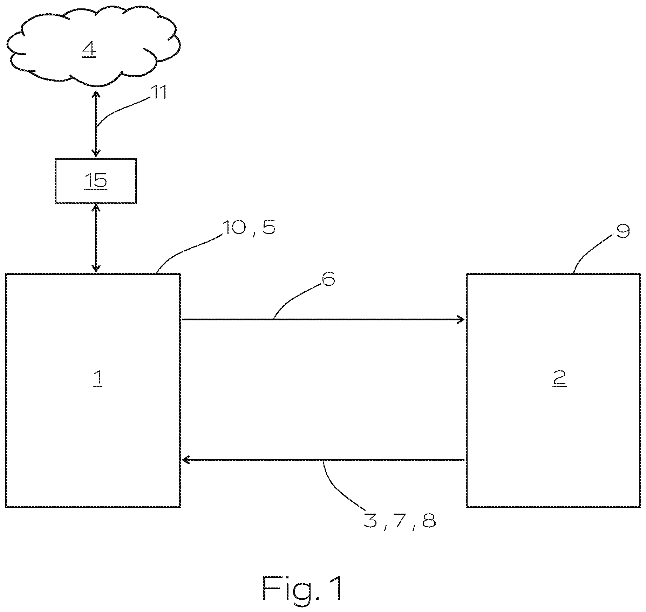

**Fig. 1** zeigt eine schematische Darstellung der Grundkomponenten einer möglichen Ausführungsform eines Computersystems, insbesondere zur Ausführung eines beschriebenen Verfahrens. Ein elektronisches Dokument wie beispielsweise eine elektronische Datei eines Textverarbeitungsprogramms, eines Grafikverarbeitungsprogramms, eines E-Mail-Programms, insbesondere ein ungeöffneter Anhang eines E-Mail Programms, oder Ähnliches wird aus einer unsicheren Quelle 4 an das interne System 10 geschickt. Das elektronische Dokument kann ein Dokument aus einer beliebigen unsicheren Quelle sein. Beispielsweise auch ein von einer Webseite heruntergeladenes Dokument oder ein über einen mobilen Datenträger erhaltenes Dokument. Das interne System 10 ist beispielsweise ein lokales Netzwerk 5, an welches ein Benutzercomputer 15 gekoppelt ist, wobei der Benutzercomputer 15 entweder direkt in das lokale Netzwerk 5 integriert oder mittels Router bzw. Firewall damit verbunden sein kann, oder indirekt mit dem internen System kommuniziert, beispielsweise über das Senden von E-Mails, das Übertragen von Dokumenten über ein Postfach oder das Übertragen von Dokumenten über einen Serverdienst im Internet. Insbesondere enthält gemäß der vorliegenden Ausführungsform das interne System 10 einen Steuerungscomputer 1. Das Dokument bzw. die Datei wird über eine Netzwerkschnittstelle 11, also beispielsweise per E-Mail oder über sonst einen digitalen Weg an den Steuerungscomputer 1 übertragen. Bevor das zu bereinigende elektronische Dokument im internen System 10 geöffnet wird, wird dieses von dem Steuerungscomputer 1 an einen Anzeigecomputer 2 übermittelt. Die Übermittlung des zu bereinigenden elektronischen Dokuments an den Anzeigecomputer 2 kann über eine geeignete Datenverbindung bzw. Datenschnittstelle, insbesondere über eine serielle Datenschnittstelle 6 erfolgen. Der Anzeigecomputer 2 ist Teil eines isolierten Systems 9. Dieses isolierte System 9 ist von dem internen System 10 bevorzugt soweit isoliert, dass eine etwaige Schadsoftware von dem Anzeigecomputer 2 nicht auf das interne System 10, auf den Steuerungscomputer 1 und besonders nicht auf den Benutzercomputer 15 gelangen kann.

Der Anzeigecomputer 2 erzeugt ein Darstellungssignal 3 und überträgt dieses zurück an den Steuerungscomputer 1. Das Darstellungssignal 3 wird insbesondere dadurch generiert, dass das zu bereinigende elektronische Dokument auf dem Anzeigecomputer 2 geöffnet wird. In weiterer Folge wird jenes Signal, das bevorzugt üblicherweise an ein

Anzeigegerät 12 wie einen Monitor gesendet wird, zurück an den Steuerungscomputer 1 gesendet. Dieses Darstellungssignal 3 enthält jedoch lediglich Informationen zum dargestellten Bild. Schadsoftware kann über dieses Signal in der Regel nicht übertragen werden. Gegebenenfalls ist das Darstellungssignal 3 ein HDMI-Signal 7, das über eine HDMI-Schnittstelle 8 übertragen wird. Aus diesem Darstellungssignal 3 kann dann in weiterer Folge durch den Steuerungscomputer 1 eine elektronische Dokumentenkopie erstellt werden, wobei diese Dokumentenkopie bevorzugt lediglich den Dokumenteninhalt kopiert, nicht jedoch etwaige Schadprogramme oder Metadaten.

Gegebenenfalls wird das elektronische Originaldokument vor der Erzeugung des Darstellungssignals 3 zuerst in ein Zwischenformat konvertiert. Das Zwischenformat kann beispielsweise eine Bilddatei wie beispielsweise eine Bitmap-Datei oder eine PDF-Datei sein. Das Originaldokument kann im Grunde jede Art von Dokumentendatei sein, die der Anzeigecomputer 2 öffnen kann.

Bevorzugt ist vorgesehen, dass die Übermittlung des zu bereinigenden Dokuments vom Steuerungscomputer 1 auf den Anzeigecomputer 2 über eine Schnittstelle bzw. eine Datenleitung erfolgt, die Daten nur in eine Richtung versenden kann. Beispielsweise kann dies über eine serielle Schnittstelle 6 umgesetzt werden.

Gegebenenfalls können in allen Ausführungsformen dem Darstellungssignal 3 zusätzliche Informationen beigefügt werden. Beispielsweise können dem Dokumenteninhalt dadurch eine weitere Information wie beispielsweise eine Seitenzahl oder weitere Informationen hinzugefügt werden. Diese können beispielsweise auf der elektronischen Kopie des Dokuments vermerkt werden. Beispielsweise kann ein QR-Code auf der Dokumentenkopie aufscheinen, der Aufschluss über Metadaten wie beispielsweise Seitenzahl, ursprünglicher Dateiname oder andere Informationen gibt.

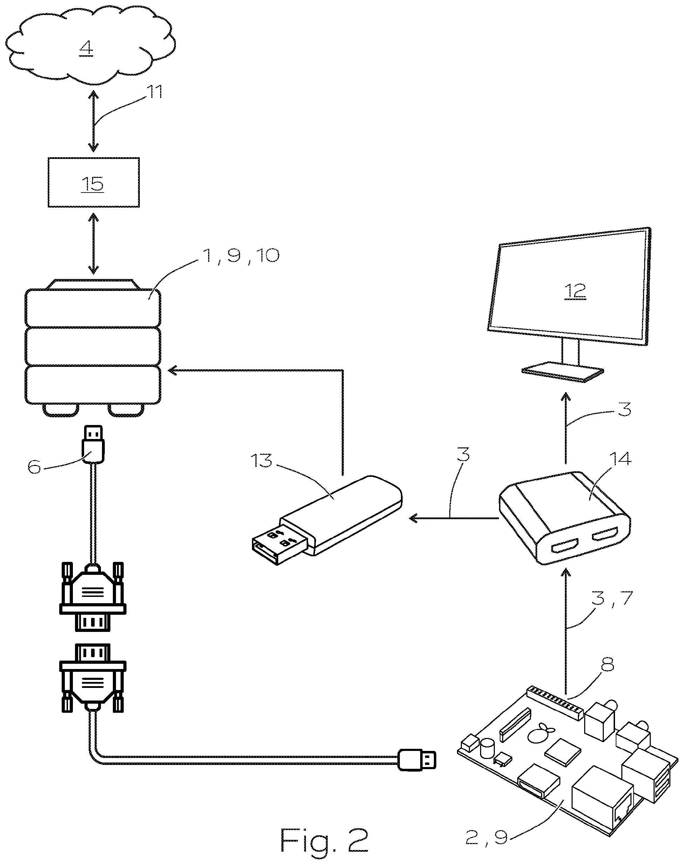

**Fig. 2** zeigt eine mögliche Ausgestaltung eines Computersystems. Das System umfasst einen Steuerungscomputer 1, der mit einem Anzeigecomputer 2 verbunden ist. Insbesondere ist diese Verbindung über eine serielle Datenschnittstelle 6 hergestellt. Im vorliegenden Fall sind mit den USB-Ports des Steuerungscomputers 1 und des Anzeigecomputers 2 jeweils ein USB-RS232 Adapter verbunden, wobei die beiden seriellen Schnittstellen über eine Null-Modem-Verbindung miteinander gekoppelt sind, wobei diese beiden Kabel über eine Null-Modem-Verbindung miteinander gekoppelt sind, um die Verbindung herzustellen.

Ein Benutzercomputer 15 ist über eine Netzwerkschnittstelle 11 mit einer unsicheren Quelle 4 verbunden, um zu bereinigende elektronische Dokumente zu empfangen. Um diese elektronischen Dokumente zu bereinigen, kann vom Benutzercomputer 15 die elektronische Datei bzw. das zu bereinigende elektronische Dokument - bevorzugt ungeöffnet - an den Steuerungscomputer 1 gesendet werden.

Dies kann beispielsweise über eine REST-Schnittstelle erfolgen. Der Steuerungscomputer 1 erhält somit elektronische Dokumente aus einer unsicheren Quelle 4.

Das Computersystem umfasst in der vorliegenden Ausführungsform ein Anzeigegerät 12, das insbesondere als Monitor ausgebildet ist. Dieses Anzeigegerät 12 ist dazu geeignet und/oder eingerichtet, das Darstellungssignal 3 des Anzeigecomputers 2 und gegebenenfalls des Steuerungscomputers 1 anzuzeigen. Gegebenenfalls können hierfür auch zwei Anzeigegeräte 12 vorgesehen sein, wobei diese Ausführungsform nicht dargestellt ist. Der Anzeigecomputer 2 ist zur Übermittlung des Darstellungssignals 3 an den Steuerungscomputer 1 mit diesem verbunden. Insbesondere geschieht dies über die HDMI-Schnittstelle 8 bzw. über das HDMI-Signal 7. In der vorliegenden Ausführungsform ist hierzu ein sogenannter Grabber 13 vorgesehen, also eine Vorrichtung, die das Darstellungssignal 3 digitalisiert bzw. aufzeichnet. Dieser Grabber 13 ist mit dem Steuerungscomputer 1 verbunden, sodass dieser das Darstellungssignal 3 aufzeichnen oder das aufgezeichnete Signal verarbeiten kann, um eine digitale Dokumentenkopie zu erstellen.

Im vorliegenden Fall ist zwischen dem Grabber 13 und dem Anzeigecomputer 2 ein Splitter 14 vorgesehen, der das Darstellungssignal 3 einerseits zu dem Grabber 13, andererseits aber auch zu dem Anzeigegerät 12 leitet. Gegebenenfalls kann die Verbindung zwischen dem Anzeigecomputer 2 und dem Anzeigegerät 12 auch entfallen.

Alternativ zum HDMI-Signal 7 kann die Übertragung des Darstellungssignals 3 in allen Ausführungsformen über ein Lichtleitersignal erfolgen.

Wird nun ein zu bereinigendes elektronisches Dokument aus der unsicheren Quelle 4 an den Steuerungscomputer 1 übermittelt, so wird diese Datei bevorzugt ungeöffnet an den Anzeigecomputer 2 weitergeleitet. Auf dem Anzeigecomputer 2 wird das zu bereinigende elektronische Dokument geöffnet und dargestellt bzw. ein Darstellungssignal 3 erzeugt. Das Darstellungssignal 3 wird zurück an den Steuerungscomputer 1 gesendet, wobei bevorzugt zwischen dem Steuerungscomputer 1 und dem Anzeigecomputer 2 ein Grabber 13 vorgesehen ist. Das Darstellungssignal 3 wird gespeichert und/oder angezeigt. Dadurch wird eine bereinigte, digitale Dokumentenkopie erstellt.

Gegebenenfalls werden auf dem Anzeigecomputer 2 oder auf dem Steuerungscomputer 1 der Dokumentenkopie weitere Informationen hinzugefügt, wie beispielsweise die Seitenzahl oder ein QR-Code.

Wie angemerkt, wird bei dem Computersystem das zu bereinigende elektronische Dokument, beispielsweise eine PDF-Datei, eine Textverarbeitungsdatei oder eine andere Datei von dem Benutzer, insbesondere von dem Benutzercomputer 15, an den Steuerungscomputer 1 gesendet bzw. übertragen. Diese Übertragung kann beispielsweise über eine REST-Schnittstelle erfolgen.

Gegebenenfalls wird die Datei auf dem Anzeigecomputer 2 in ein Zwischenformat, beispielsweise in eine PDF-Datei, umgewandelt. Zudem kann der Anzeigecomputer 2 das elektronische Dokument durchblättern und Abschnitt für Abschnitt, insbesondere Seite für Seite, als Darstellungssignal 3 zu dem Steuerungscomputer 1 zurückspielen. Der Steuerungscomputer 1 kann dann diese Abschnitte bzw. Seiten als Bild aufzeichnen und wiederum in ein lesbares Dateiformat, wie insbesondere eine PDF-Datei, umwandeln.

Gegebenenfalls wird die digitale Dokumentenkopie durch eine Texterkennungssoftware analysiert, sodass der Text der Bilddatei erkannt wird und dieser einfach vom Benutzer weiterverwendet werden kann.

Die digitale Dokumentenkopie, insbesondere mit weiteren Informationen, kann dann an den Benutzercomputer 15 des Benutzers, insbesondere als Antwort auf die REST-Anfrage, an den Benutzer zurückgesendet werden.

Bevorzugt hat der Steuerungscomputer 1 keine Verbindung mit dem Internet und wird bevorzugt auch nicht interaktiv verwendet. Vielmehr wird gegebenenfalls auf einem im gleichen sensiblen Netzwerk befindlichen Computer das zu bereinigende elektronische Dokument bereitgestellt und, ohne es zu öffnen, direkt an den Steuerungscomputer 1 übermittelt.

Auch der Anzeigecomputer 2 ist bevorzugt nicht in das lokale Netzwerk 5 eingebunden, sondern nur über notwendige Schnittstellen zur Übertragung und zur Erstellung des Darstellungssignals 3 mit dem Steuerungscomputer 1 verbunden. Wird der Anzeigecomputer 2 von einer Schadsoftware befallen, so kann dieser einfach zurückgesetzt werden.

Der Steuerungscomputer 1 ist gegebenenfalls mit einem HDMI-Simulator-Dongle versehen, damit er stets ein Bild produziert, welches über das interne Netzwerk mittels VNC dargestellt werden kann. Dem Anzeigecomputer 2 wird der Anschluss eines Monitor vorgespielt, da sich der Grabber 13 als Monitor zu erkennen gibt. Zur Fehlersuche wäre man in diesem Fall auf die gegrabbten Bilder angewiesen. Falls das nicht reicht, kann gegebenenfalls über einen HDMI Splitter ein externer Monitor angeschlossen werden.

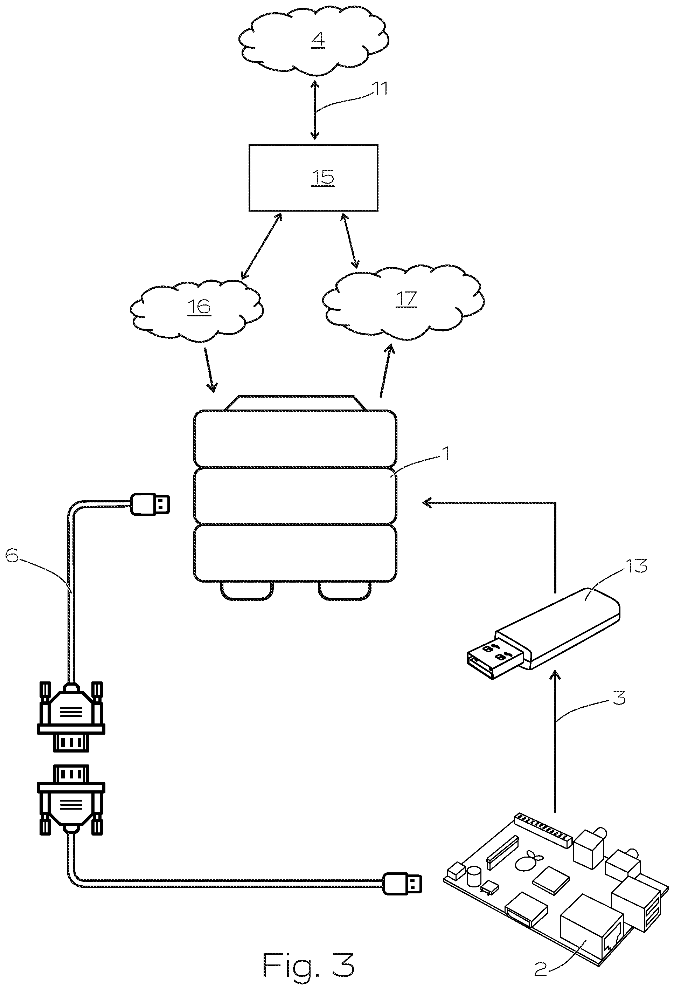

**Fig. 3** zeigt eine schematische Darstellung eines Computersystems. Das Computersystem umfasst einen Steuerungscomputer 1 und einen Anzeigecomputer 2. Das zu bereinigende elektronische Dokument wird insbesondere per E-Mail, also beispielsweise über einen IMAP-Server 16 an den Steuerungscomputer 1 übertragen. Der Steuerungscomputer 1 erkennt die Datei(en), lädt diese gegebenenfalls herunter bzw. extrahiert die Anhänge, beispielsweise Dateien mit den Endungen pdf, doc, docx, xIs, xlsx, ppt, pptx etc.

Die zu bereinigenden elektronischen Dokumente werden, bevorzugt einzeln, an den Anzeigecomputer 2 übertragen. Dies erfolgt beispielsweise über eine serielle Datenschnittstelle 6. Der Anzeigecomputer 2 wandelt die zu bereinigenden Dokumente bevorzugt in ein Zwischenformat um, öffnet dieses und blättert die Dateien Abschnitt für Abschnitt bzw. Seite für Seite durch. Dabei wird ein Darstellungssignal 3 generiert, das zurück an den Steuerungscomputer 1 übertragen wird. Insbesondere wird dies über die Bildschirmausgabe des Anzeigecomputers 2 über einen Grabber 13 umgesetzt. Zudem kann, wie auch in den anderen Ausführungsformen, das dadurch erzeugte Bild durch eine Texterkennungssoftware analysiert werden, um den Text zu erfassen. In weiterer Folge können die Daten, insbesondere Bilddaten, Textdaten und weitere Informationen, wiederum zu einem anzeigbaren Dokument zusammengefügt werden. Dieses Dokument kann beispielsweise eine PDF-Datei sein. Das Zusammensetzen geschieht gegebenenfalls auf dem Steuerungscomputer 1. In weiterer Folge kann diese Datei als E-Mail wieder an den Benutzer zurückgesendet werden. Beispielsweise ist hierzu der Steuerungscomputer 1 mit einem SMTP-Server 17 verbunden.

Bevorzugt ist vorgesehen, dass der Steuerungscomputer 1 zwar mit dem Internet verbunden ist, diese Verbindung jedoch auf die Kommunikation mit dem E-Mail-Server bzw. den E-Mail-Servern beschränkt ist. Der Anzeigecomputer 2 ist bevorzugt nicht Teil des lokalen Netzwerks 5.

## Patentansprüche

1. **Computerimplementiertes Verfahren** zur Bereinigung elektronischer Dokumente von möglichen Schadprogrammen, umfassend folgende Schritte:
- Empfangen eines elektronischen Originaldokuments auf einem Steuerungscomputer (1);
- Übertragen des elektronischen Originaldokuments an einen Anzeigecomputer (2);
- Übertragen des Dokumenteninhalts des Originaldokuments über ein Darstellungssignal (3) von dem Anzeigecomputer (2) an den Steuerungscomputer (1),
- Erstellen einer elektronischen Dokumentenkopie aus dem Darstellungssignal (3) durch den Steuerungscomputer (1).

2. Verfahren nach Anspruch 1, **dadurch gekennzeichnet, dass** das elektronische Originaldokument vor der Erzeugung des Darstellungssignals (3) zuerst in ein Zwischenformat konvertiert wird,
- wobei das Originaldokument insbesondere eine elektronische Datei eines Textverarbeitungsprogramms, eines Grafikverarbeitungsprogramms oder eines E-Mail-Programms wie beispielsweise eine elektronische Datei nach einem der folgenden Dateiformate: .doc, docx, pdf, xls, xlsx, ppt, pptx, E-Mail oder ähnliches ist,
- und wobei das Zwischenformat eine Bilddatei und/oder ein Bitmap-File, ein pdf-File oder ein sonstiges, mehrere Dokumentseiten enthaltendes, Container-File ist.

3. Verfahren nach Anspruch 1 oder 2, **dadurch gekennzeichnet,**
- **dass** das Originaldokument, insbesondere im Zwischenformat, auf dem Anzeigecomputer (2) geöffnet wird,
- **dass** das Darstellungssignal (3) insbesondere das Monitorsignal des Anzeigecomputers (2) ist,
- **dass** das Darstellungssignal (3) aufgezeichnet wird und der Dokumenteninhalt in einer eigenen elektronischen Datei als bereinigte, elektronische Dokumentenkopie gespeichert und/oder angezeigt wird.

4. Verfahren nach einem der Ansprüche 1 bis 3, **dadurch gekennzeichnet, dass** die elektronische Dokumentenkopie oder das Originaldokument im Zwischenformat von einer Texterkennungssoftware verarbeitet wird und der erkannte Text in der Dokumentenkopie gespeichert wird.

5. Verfahren nach einem der Ansprüche 1 bis 4, **dadurch gekennzeichnet,**
- **dass** das elektronische Originaldokument auf dem Steuerungscomputer (1) von einer unsicheren Quelle (4), insbesondere aus dem Internet und/oder von außerhalb des lokalen Netzwerks (5), empfangen wird,
- insbesondere dass das elektronische Originaldokument von einem Benutzercomputer (15) an den Steuerungscomputer (1) gesendet wird.

6. Verfahren nach einem der Ansprüche 1 bis 5, **dadurch gekennzeichnet, dass** das Übertragen des elektronischen Originaldokuments an einen Anzeigecomputer (2) über eine serielle Datenschnittstelle (6) erfolgt.

7. Verfahren nach einem der Ansprüche 1 bis 6, **dadurch gekennzeichnet, dass** das Übertragen des Dokumenteninhalts des Originaldokuments von dem Anzeigecomputer (2) an den Steuerungscomputer (1) über ein HDMI-Signal (7) oder über ein Lichtleitersignal erfolgt.

8. Verfahren nach einem der Ansprüche 1 bis 7, **dadurch gekennzeichnet, dass** beim Übertragen des Dokumenteninhalts des Originaldokuments von dem Anzeigecomputer (2) an den Steuerungscomputer (1) der gesamte Dokumenteninhalt des Originaldokuments übertragen wird.

9. Verfahren nach einem der Ansprüche 1 bis 8, **dadurch gekennzeichnet, dass** der Anzeigecomputer (2) ausschließlich ein Darstellungssignal (3) an den Steuerungscomputer (1) oder an den Grabber (13) überträgt.

10. Verfahren nach einem der Ansprüche 1 bis 9, **dadurch gekennzeichnet,**
- **dass** der elektronischen Dokumentenkopie weitere Informationen, wie beispielsweise Metadaten, eine Seitenzahl, der ursprüngliche Dateiname und/oder ein QR-Code hinzugefügt werden,
- wobei diese Information insbesondere der dem Darstellungssignal (3) beigefügt werden.

11. **Computersystem** zur Bereinigung elektronischer Dokumente von möglichen Schadprogrammen, umfassend einen Steuerungscomputer (1) und einen Anzeigecomputer (2),
- wobei der Steuerungscomputer (1) ein elektronisches Originaldokument empfängt und an den Anzeigecomputer (2) überträgt,
- wobei der Anzeigecomputer (2) den Dokumenteninhalt des vom Steuerungscomputer (1) erhaltenen Originaldokuments über ein Darstellungssignal (3) zurück an den Steuerungscomputer (1) überträgt,
- und wobei der Steuerungscomputer (1) aus dem Darstellungssignal (3) eine elektronische Dokumentenkopie erstellt.

12. Computersystem nach Anspruch 11, **dadurch gekennzeichnet, dass** eine serielle Datenschnittstelle (6) vorgesehen ist, über die der Steuerungscomputer (1) das elektronisches Originaldokument an den Anzeigecomputer (2) überträgt.

13. Computersystem nach Anspruch 11 oder 12, **dadurch gekennzeichnet, dass** eine HDMI-Schnittstelle (8) oder eine Lichtleitersignalschnittstelle vorgesehen ist, über die der Anzeigecomputer (2) den Dokumenteninhalt zurück an den Steuerungscomputer (1) überträgt.

## Claims

1. **A computer-implemented method** for clearing possible malware from electronic documents, comprising the following steps:
- receiving an electronic original document on a control computer (1);
- transmitting the electronic original document to a display computer (2);
- transmitting the document content of the original document via a display signal (3) from the display computer (2) to the control computer (1);
- the control computer (1) creating an electronic document copy from the display signal (3).

2. The method according to claim 1, **characterized in that** the original electronic document is first converted into an intermediate format before the display signal (3) is generated,
- wherein the original document is in particular an electronic file of a word processing programme, a graphics processing programme or an e-mail programme, such as an electronic file according to one of the following file formats: .doc, docx, pdf, xls, xlsx, ppt, pptx, e-mail or similar,
- and wherein the intermediate format is an image file and/or a bitmap file, a pdf file or another container file containing several document pages.

3. The method according to claim 1 or 2, **characterized**
- **in that** the original document, in particular in the intermediate format, is opened on the display computer (2),
- **in that** the display signal (3) is in particular the monitor signal of the display computer (2),
- **in that** the display signal (3) is recorded and the document content is stored and/or displayed in a separate electronic file as a cleared, electronic document copy.

4. The method according to one of claims 1 to 3, **characterized in that** the electronic document copy or the original document in intermediate format is processed by a text recognition software and the recognized text is saved in the document copy.

5. The method according to one of claims 1 to 4, **characterized**
- **in that** the electronic original document is received on the control computer (1) from an insecure source (4), in particular from the Internet and/or from outside the local network (5),
- in particular in that the electronic original document is sent from a user computer (15) to the control computer (1).

6. The method according to one of claims 1 to 5, **characterized in that** the electronic original document is transmitted to a display computer (2) via a serial data interface (6).

7. The method according to one of claims 1 to 6, **characterized in that** the document content of the original document is transmitted from the display computer (2) to the control computer (1) via an HDMI signal (7) or via an optical fibre signal.

8. The method according to one of claims 1 to 7, **characterized in that** when the document content of the original document is transmitted from the display computer (2) to the control computer (1), the entire document content of the original document is transmitted.

9. The method according to one of claims 1 to 8, **characterized in that** the display computer (2) exclusively transmits a display signal (3) to the control computer (1) or to the grabber (13).

10. The method according to one of claims 1 to 9, **characterized**
- **in that** further information, such as metadata, a page number, the original file name and/or a QR code, is added to the electronic document copy,
- wherein this information is added in particular to the display signal (3).

11. A computer system for clearing possible malware from electronic documents, comprising a control computer (1) and a display computer (2),
- wherein the control computer (1) receives an original electronic document and transmits it to the display computer (2),
- wherein the display computer (2) transmits the document content of the original document received from the control computer (1) back to the control computer (1) via a display signal (3),
- and wherein the control computer (1) creates an electronic document copy from the display signal (3).

12. The computer system according to claim 11, **characterized in that** a serial data interface (6) is provided, via which the control computer (1) transmits the electronic original document to the display computer (2).

13. The computer system according to claim 11 or 12, **characterized in that** an HDMI interface (8) or an optical fibre signal interface is provided, via which the display computer (2) transmits the document content back to the control computer (1).

## Revendications

1. **Procédé mis en œuvre par ordinateur** pour le nettoyage de documents électroniques d'éventuels programmes malveillants, comprenant les étapes suivantes :
- réception d'un document électronique original sur un ordinateur de commande (1) ;
- transmission du document électronique original à un ordinateur d'affichage (2) ;
- transmission du contenu du document original à l'ordinateur de commande (1) par l'intermédiaire d'un signal de représentation (3) à partir de l'ordinateur d'affichage (2) ;
- création d'une copie électronique du document à partir du signal de représentation (3) par l'ordinateur de commande (1).

2. Procédé selon la revendication 1, **caractérisé en ce que** le document électronique original est d'abord converti dans un format intermédiaire avant la génération du signal de représentation (3),
- dans lequel le document original est en particulier un fichier électronique d'un programme de traitement de texte, d'un programme de traitement graphique ou d'un programme de courrier électronique, tel qu'un fichier électronique selon l'un des formats de fichier suivants : .doc, docx, pdf, xls, xlsx, ppt, pptx, courrier électronique ou similaire,
- et dans lequel le format intermédiaire est un fichier image et/ou un fichier bitmap, un fichier pdf ou un autre fichier conteneur contenant plusieurs pages de document.

3. Procédé selon la revendication 1 ou 2, **caractérisé**
- **en ce que** le document original est ouvert sur l'ordinateur d'affichage (2), en particulier dans le format intermédiaire,
- **en ce que** le signal de représentation (3) est en particulier le signal de moniteur de l'ordinateur d'affichage (2),
- **en ce que** le signal de représentation (3) est enregistré et le contenu du document est mémorisé et/ou affiché dans un fichier électronique propre en tant que copie électronique nettoyée du document.

4. Procédé selon l'une des revendications 1 à 3, **caractérisé en ce que** la copie électronique du document ou le document original au format intermédiaire est traité par un logiciel de reconnaissance de texte et le texte reconnu est stocké dans la copie du document.

5. Procédé selon l'une des revendications 1 à 4, **caractérisé**
- **en ce que** le document électronique original est reçu sur l'ordinateur de commande (1) à partir d'une source non sûre (4), en particulier à partir d'Internet et/ou de l'extérieur du réseau local (5),
- en particulier en ce que le document électronique original est envoyé à l'ordinateur de commande (1) par un ordinateur utilisateur (15).

6. Procédé selon l'une des revendications 1 à 5, **caractérisé en ce que** la transmission du document électronique original à un ordinateur d'affichage (2) est réalisée par l'intermédiaire d'une interface de données série (6).

7. Procédé selon l'une des revendications 1 à 6, **caractérisé en ce que** la transmission du contenu du document original de l'ordinateur d'affichage (2) à l'ordinateur de commande (1) est réalisée par un signal HDMI (7) ou par un signal de fibre optique.

8. Procédé selon l'une des revendications 1 à 7, **caractérisé en ce que** lors de la transmission du contenu du document original de l'ordinateur d'affichage (2) à l'ordinateur de commande (1), l'intégralité du contenu du document original est transmise.

9. Procédé selon l'une des revendications 1 à 8, **caractérisé en ce que** l'ordinateur d'affichage (2) transmet exclusivement un signal de représentation (3) à l'ordinateur de commande (1) ou à la carte d'acquisition (13).

10. Procédé selon l'une des revendications 1 à 9, **caractérisé**
- **en ce que** d'autres informations, telles que des métadonnées, un numéro de page, le nom de fichier d'origine et/ou un code QR, sont ajoutées à la copie électronique du document,
- dans lequel ces informations sont notamment ajoutées au signal de représentation (3).

11. **Système informatique** pour le nettoyage de documents électroniques d'éventuels programmes malveillants, comprenant un ordinateur de commande (1) et un ordinateur d'affichage (2),
- dans lequel l'ordinateur de commande (1) reçoit un document électronique original et le transmet à l'ordinateur d'affichage (2),
- dans lequel l'ordinateur d'affichage (2) transmet en retour à l'ordinateur de commande (1) le contenu du document original reçu de l'ordinateur de commande (1) par l'intermédiaire d'un signal de représentation (3),
- et dans lequel l'ordinateur de commande (1) crée une copie électronique du document à partir du signal de représentation (3).

12. Système informatique selon la revendication 11, **caractérisé en ce qu'**il est prévu une interface de données série (6) par laquelle l'ordinateur de commande (1) transmet le document électronique original à l'ordinateur d'affichage (2).

13. Système informatique selon la revendication 11 ou 12, **caractérisé en ce qu'**il est prévu une interface HDMI (8) ou une interface de signal de fibre optique par laquelle l'ordinateur d'affichage (2) retransmet le contenu du document à l'ordinateur de commande (1).
